(19) Europäisches Patentamt / European Patent Office / Office européen des brevets

(11) **EP 2 736 043 A2**

(12) **EUROPEAN PATENT APPLICATION**

(43) Date of publication:
**28.05.2014 Bulletin 2014/22**

(51) Int Cl.:
**G10L 25/51** (2013.01)  **G10L 21/04** (2013.01)
**G10L 25/48** (2013.01)

(21) Application number: **13188260.7**

(22) Date of filing: **11.10.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **22.11.2012 JP 2012256715**

(71) Applicant: **FUJITSU LIMITED
Kawasaki-shi,
Kanagawa 211-8588 (JP)**

(72) Inventors:
• **Ishikawa, Chisato
  Kanagawa, 211-8588 (JP)**
• **Togawa, Taro
  Kanagawa, 211-8588 (JP)**
• **Otani, Takeshi
  Kanagawa, 211-8588 (JP)**
• **Suzuki, Masanao
  Kanagawa, 211-8588 (JP)**

(74) Representative: **HOFFMANN EITLE
Patent- und Rechtsanwälte
Arabellastrasse 4
81925 München (DE)**

(54) **Signal processing device, method for processing signal**

(57)     A signal processing device includes, an input unit configured to receive speech of a speaker as a first signal; a detection unit configured to detect an expiration period included in the first signal; an extraction unit configured to extract a number of phonemes included in the expiration period; and a control unit configured to control a second signal, which is an output to the speaker, on the basis of the number of phonemes and a length of the expiration period.

## FIG. 2

**Description**

FIELD

The embodiments discussed herein are, for example, related to a signal processing device that controls input and output signals such as speech signals and image signals, a method for processing a signal, a computer-readable recording medium on which a signal processing program is recorded, and a mobile terminal device.

BACKGROUND

Currently, methods for controlling a speech signal, which is an example of an input signal such that the speech signal becomes easy to hear have been disclosed. For example, as disclosed in Katsuyuki Niyada "Research on Speech Recognition Interface for Elderly People Based on Acoustic Feature Extraction of Elderly Speech", Report of the Grant-in-Aid for Scientific Research, 19560387, because the speech recognition performance of elderly people declines as hearing decreases due to aging, it generally becomes difficult for the elderly people to recognize speech of a speaker in a received speech sound in bidirectional speech communication using mobile terminals or the like if the speed of the speech increases. Therefore, in Japanese Patent No. 3619946, for example, a technique for improving the audibility of speech by detecting speech periods in a received speech sound and extending the speech and for reducing delay caused by extending the speech by shortening non-speech periods is disclosed.

In the control of speech signals, because the appropriate amount of control (for example, the amount of power of a speech signal to be amplified) varies depending on the age, a user is supposed to input his/her age, which decreases operability. In the case of a mobile terminal used only by a single user, it is possible that the user does not have to input his/her age so frequently. In these years, however, calls are often made through a speech application installed on a personal computer shared by general users. In addition, a fixed telephone installed in a call center or the like is often shared by general users, and therefore the decrease in operability caused by input of one's age is not negligible.

Under such circumstances, a method for estimating the age on the basis of the speed of speech has been disclosed. In this method, the speed of speech is calculated from an input sound at a time when a speaker has uttered a particular sample sentence or word, and if the speed of speech is lower than a predetermined threshold, the speaker is determined to be an elderly person. The speed of speech in this case is the number of vowels (the number of moras) uttered in one second, and the unit used is moras/s.

As a result of a new examination made by the inventors, the following new problem has been identified in the method for determining the age on the basis of the speed of speech in the related art. In the above-described method for estimating the age on the basis of the speed of speech, predetermined sample sentences are prepared in advance, and elderly people and non-elderly people are told to speak the sample sentences. The elderly people and the non-elderly people are distinguished using, for example, average speeds of speech and a certain threshold. Here, for example, if one of the sample sentences is "shimekiri wa itsu desuka (when is the deadline?) (10 moras)", the average speeds of speech of the elderly people and the non-elderly people are as follows.

$$\text{Average speed of speech of elderly people} = 10 \text{ (moras)}/1.60 \text{ (average time)} = 6.3 \text{ (moras/s)}$$

$$\text{Average speed of speech of non-elderly people} = 10 \text{ (moras)}/1.14 \text{ (average time)} = 8.8 \text{ (moras/s)}$$

In the case of the above sample sentence, a threshold for the speed of speech for distinguishing the elderly people and the non-elderly people may be 7 (moras/s).

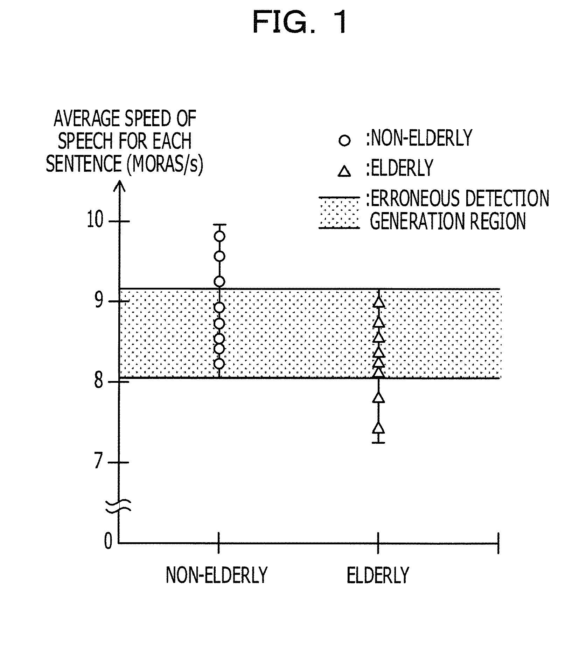

In bidirectional speech communication using mobile terminals or the like, however, sample sentences are not prepared and obviously the content of speech continuously changes. FIG. 1 is a diagram illustrating the distribution of the average speeds of speech of elderly people and non-elderly people. In FIG. 1, the distribution of the average speeds of speech of subjects for eight sample sentences whose numbers of moras are different from one another is illustrated. The subjects in FIG. 1 were 8 non-elderly people (6 males and 2 females) and 30 elderly people (15 males and 15 females). The sample sentences included, for example, "itsumo no kissaten de matteite kudasai (please wait for me at the café)", "sukiyaki no zairyo wo kattekite kudasai (please go get the ingredients for sukiyaki)", "wakarimashita (I see)", and "kohi ni miruku wa iremasuka (do you put milk in your coffee?)". As illustrated in FIG. 1, the average speeds of speech of the non-elderly people and the elderly people were not the same between the sentences whose numbers of moras are different from one another but distributed in certain ranges. For example, in the case of the sentence "itsumo no kissaten de matteite kudasai (please wait for me at the café) (19 moras)", the average speed of speech of the elderly people was as follows.

$$\text{Average speed of speech of elderly people} = 19 \text{ (moras)}/2.10 \text{ (average time)} = 9.0 \text{ (moras/s)}$$

Here, if the determination using the above threshold (7 (moras/s)) is made, erroneous detection is caused since the speed of speech has changed for some reason. In FIG. 1, the average speeds of speech that fall within an erroneous detection generation region are illustrated. Therefore, in bidirectional speech communication in which the content of speech continuously changes, it is difficult to accurately estimate the age of a speaker in accordance with the speed of speech of the speaker through a determination using the speed of speech simply defined by the number of moras and time and a certain threshold. In other words, a signal processing device capable of accurately performing control according to the recognition performance of a speaker has not been proposed.

An object of a signal processing device according to the embodiments is to provide a signal processing device capable of accurately performing control according to the recognition performance of a speaker.

SUMMARY

In accordance with an aspect of the embodiments, a signal processing device includes, an input unit configured to receive speech of a speaker as a first signal; a detection unit configured to detect an expiration period included in the first signal; an extraction unit configured to extract a number of phonemes included in the expiration period; and a control unit configured to control a second signal, which is an output to the speaker, on the basis of the number of phonemes and a length of the expiration period.

The object and advantages of the invention will be realized and attained by means of the elements and combinations particularly pointed out in the claims. It is to be understood that both the foregoing general description and the following detailed description are exemplary and explanatory and are not restrictive of the invention, as claimed.

The signal processing device disclosed herein is capable of accurately performing control according to the recognition performance of a speaker.

BRIEF DESCRIPTION OF DRAWINGS

These and/or other aspects and advantages will become apparent and more readily appreciated from the following description of the embodiments, taken in conjunction with the accompanying drawing of which:

FIG. 1 is a diagram illustrating the distribution of the average speeds of speech of non-elderly people and elderly people;

FIG. 2 is a functional block diagram illustrating a signal processing device according to an embodiment;

FIG. 3 is a functional block diagram illustrating a detection unit according to the embodiment;

FIG. 4 is a diagram illustrating a result of detection of an expiration period performed by the detection unit;

FIG. 5 is a diagram illustrating the relationship between the number of moras in the expiration period and an average speed of speech in the expiration period;

FIG. 6 is a table including the data structure of a first threshold according to the number of moras included in the expiration period;

FIG. 7 is a diagram illustrating the relationship between the speed of speech and an estimated age according to the speed of speech;

FIG. 8A is a diagram illustrating the relationship between a decrease in hearing at each age and frequency and FIG. 8B is a diagram illustrating the relationship between the amount of power of a frequency spectrum to be corrected at each age and the frequency;

FIG. 9 is a flowchart illustrating a method for processing a signal used by the signal processing device;

FIG. 10 is a functional block diagram illustrating a signal processing device according to another embodiment;

FIG. 11 is a diagram illustrating the hardware configuration of a computer that functions as a signal processing device according to an embodiment; and

FIG. 12 is a diagram illustrating the hardware configuration of a mobile terminal apparatus according to an embodiment.

DESCRIPTION OF EMBODIMENTS

Signal processing devices, a method for processing a signal, and a signal processing program according to embodiments will be described hereinafter. The embodiments do not limit the technique disclosed herein.

(First Embodiment)

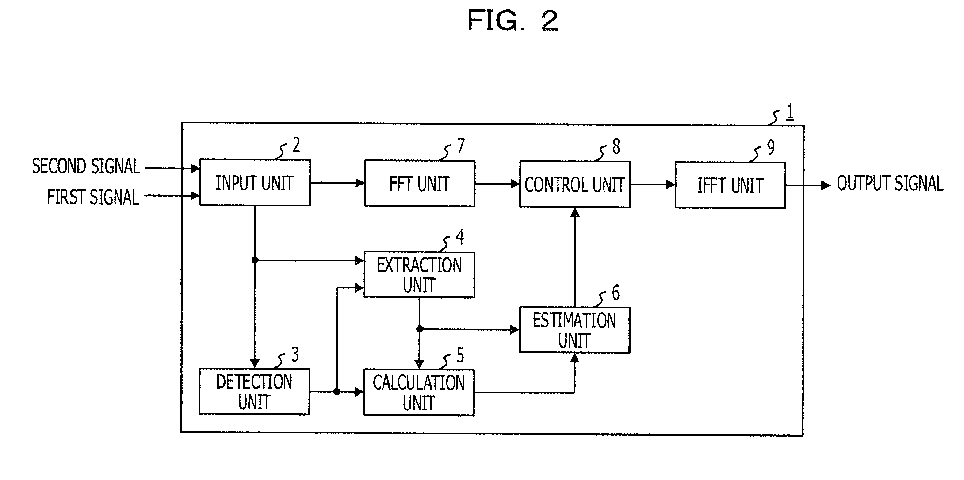

FIG. 2 is a functional block diagram illustrating a signal processing device 1 according to an embodiment. The signal processing device 1 includes an input unit 2, a detection unit 3, an extraction unit 4, a calculation unit 5, an estimation unit 6, a fast Fourier transform (FFT) unit 7, a control unit 8, and an inverse fast Fourier transform (IFFT) unit 9.

The input unit 2 is, for example, a hardware circuit adopting wired logic connection. Alternatively, the input unit 2 may be a function module realized by a computer program executed by the signal processing device 1. The input unit 2 obtains, from the outside, a first signal, which is a near-end signal, generated by speech uttered by a speaker and a second signal, which is a far-end signal, including a received speech sound. The input unit 2 may receive the first signal from, for example, a microphone, which is not illustrated, connected to or provided in the signal processing device 1. The input unit 2 may receive the second signal through, for example, a wired or wireless circuit and decode the second signal using a decoding unit, which is not illustrated, connected to or provided in the signal processing device 1. The input unit 2 outputs the received first signal to the detection unit 3 and the extraction unit 4. In addition, the input unit 2 outputs the received second signal to the FFT unit 7.

The detection unit 3 is, for example, a hardware circuit adopting wired logic connection. Alternatively, the detection unit 3 may be a function module realized by a computer program executed by the signal processing device 1. The detection unit 3 receives the first signal from the input unit 2. The detection unit 3 detects an expiration period included in the first signal. The expiration period is, for example, a period from a beginning of speech after the speaker inspires during speech to next inspiration (that is, a period between first inspiration and second inspiration or a period for which speech continues). The detection unit 3 may detect, for example, an average signal-to-noise ratio (SNR), which serves as a signal power-to-noise ratio, from a plurality of frames included in the first signal, and detect a period during which the average SNR satisfies a certain condition as the expiration period. The detection unit 3 outputs the detected expiration period to the extraction unit 4 and the calculation unit 5.

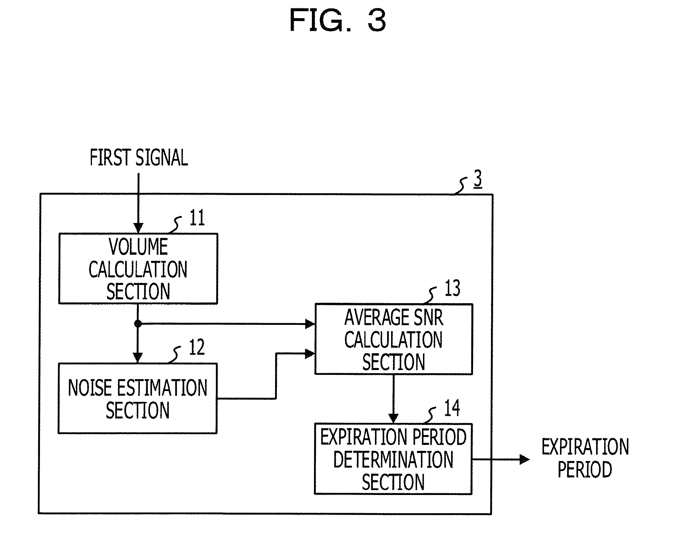

Here, a process for detecting an expiration period performed by the detection unit 3 will be described. FIG. 3 is a functional block diagram illustrating the detection unit 3 according to the embodiment. The detection unit 3 includes a volume calculation section 11, a noise estimation section 12, an average SNR calculation section 13, and an expiration period determination section 14. The detection unit 3 does not have to include the volume calculation section 11, the noise estimation section 12, the average SNR calculation section 13, and the expiration period determination section 14, and may realize the functions of these component using one or a plurality of hardware circuits adopting wired logic connection. Alternatively, the functions of the components of the detection unit 3 may be realized by function modules realized by computer programs executed by the signal processing device 1 instead of the hardware circuits adopting wired logic connection.

In FIG. 3, the first signal is input to the volume calculation section 11 through the detection unit 3. The volume calculation section 11 includes a buffer or a cache having a length m, which is not illustrated. The volume calculation section 11 calculates the volume of each frame included in the first signal, and outputs the volume to the noise estimation section 12 and the average SNR calculation section 13. The length of each frame included in the first signal is, for example, 0.2 ms. Volume S of each frame may be calculated using the following expression:

Math. 1

$$S(f) = \sum_{t=f*M}^{(f+1)*M-1} c(t)^2$$

Here, f denotes a frame number (f is an integer equal to or larger than 0) sequentially given to each frame from the beginning of input of acoustic frames included in the first signal, M denotes the time length of one frame, t denotes time, and c(t) denotes the amplitude (power) of the first signal.

The noise estimation section 12 receives the volume S(f) of each frame from the volume calculation section 11. The noise estimation section 12 estimates noise in each frame and outputs a result of the estimation of noise to the average SNR calculation section 13. In the estimation of noise in each frame made by the noise estimation section 12, for example, a first method for estimating noise or a second method for estimating noise, which will be described hereinafter, may be used.

(First Method for Estimating Noise)

The noise estimation section 12 may estimate magnitude (power) N(f) of the frame f using the following expression on the basis of the volume S(f) of the frame f, the volume S(f - 1) of the previous frame (f - 1), and the magnitude N(f - 1) of noise in the previous frame (f - 1).

Math. 2

$$N(f) = \begin{cases} \alpha \cdot N(f-1) + (1-\alpha) \cdot S(f) \ , \ (\text{if } |S(f-1) - S(f)| < \beta) \\ N(f-1) \qquad\qquad , \ (\text{otherwise}) \end{cases}$$

Here, $\alpha$ and $\beta$ are constants, and may be experimentally determined. For example, $\alpha$ may be 0.9 and $\beta$ may be 2.0. In addition, the initial value N(-1) of noise power may be experimentally determined. In Math. 2, if the volume S(f) of the frame f does not change from the volume S(f - 1) of the previous frame f - 1 by the constant $\beta$ or more, the noise power N(f) of the frame f is updated. On the other hand, if the volume S(f) of the frame f changes from the volume S(f - 1) of the previous frame f - 1 by the constant $\beta$ or more, the noise power N(f - 1) of the previous frame f - 1 is determined to be the noise power N(f) of the frame f. The noise power N(f) may be used as the result of the estimation of noise.

(Second Method for Estimating Noise)

The noise estimation section 12 may update the magnitude of noise using the following Math. 3 on the basis of a ratio of the sound S(f) of the frame f to the noise power N(f - 1) of the previous frame f - 1.

Math. 3

$$N(f) = \begin{cases} \alpha \cdot N(f-1) + (1-\alpha) \cdot S(f) \ , \ (\text{if } S(f) < \gamma \cdot N(f-1)) \\ N(f-1) \qquad\qquad , \ (\text{otherwise}) \end{cases}$$

Here, $\gamma$ is a constant, and may be experimentally determined. For example, $\gamma$ may be 2.0. In addition, the initial value N(-1) of noise power may be experimentally determined. In Math. 3, if the volume S(f) of the frame f is smaller than the product of the noise power N(f - 1) of the previous frame f - 1 and the constant $\gamma$, the noise power N(f) of the frame f is updated. On the other hand, if the volume S(f) of the frame f is equal to or larger than the product of the noise power N(f - 1) of the previous frame f - 1 and the constant $\gamma$, the noise power N(f - 1) of the previous frame f - 1 is determined to be the noise power N(f) of the frame f.

In FIG. 3, the average SNR calculation section 13 receives the volume S(f) of each frame from the volume calculation section 11, and receives the noise power N(f) of each frame, which is the result of the estimation of noise, from the noise estimation section 12. The average SNR calculation section 13 includes a cache or a memory, which is not illustrated, and holds the volume S(f) and the noise power N(f) of past L frames. The average SNR calculation section 13 calculates the average SNR in a period (frame) to be analyzed using the following expression, and outputs the average SNR to the expiration period determination section 14.

Math. 4

$$SNR(f) = \frac{1}{L} \sum_{i=0}^{L-1} \frac{S(f-i)}{N(f-i)}$$

Here, L may be determined to a value larger than the general length of a geminate consonant, that is, L may be determined to be the number of frames corresponding to 0.5 ms.

The expiration period determination section 14 receives the average SNR from the average SNR calculation section 13. The expiration period determination section 14 includes a buffer or a cache, which is not illustrated, and a preprocessing frame generated by the expiration period determination section 14 holds a flag f_breath indicating whether or not the current time is in an expiration period. The expiration period determination section 14 detects a beginning tb of an expiration period using the following Math. 5 and an end te of the expiration period using the following Math. 6 on the basis of the average SNR and the flag f_breath.

Math. 5

$$tb = f \times M \text{ (if f\_breath = not in expiration period and SNR(f)} > TH_{SNR})$$

Math. 6

$$te = f \times M -1 \text{ (if f\_breath = in expiration period and SNR(f)} < TH_{SNR})$$

Here, $TH_{SNR}$ is a threshold (may be referred to as a second threshold) for determining that the frame f processed by the expiration period determination section 14 is not noise, and may be experimentally determined. The expiration period determination section 14 outputs the expiration period detected using Math. 5 and Math. 6 to the extraction unit 4 and the calculation unit 5 through the detection unit 3.

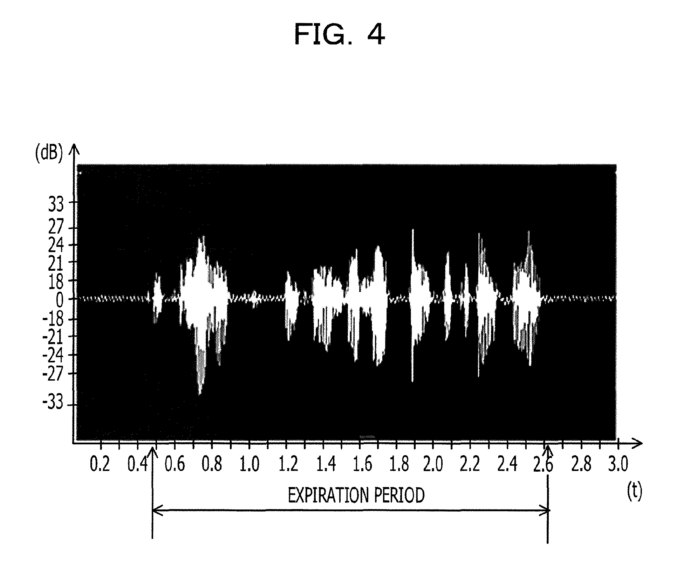

FIG. 4 is a diagram illustrating a result of the detection of an expiration period performed by the detection unit 3. In FIG. 4, the horizontal axis represents time, and the vertical axis represents the volume (amplitude) of the first signal. The expiration period is detected from a first sound, which is obtained from utterance of "itsumo no kissaten de matteite kudasai (please wait for me at the café)" including geminate consonants. As illustrated in FIG. 4, in the detection of an expiration period performed by the detection unit 3 disclosed in the first embodiment, noise is learned in accordance with background noise, and the expiration period is determined on the basis of the SNR. Therefore, erroneous detection of an expiration period due to background noise may be avoided. In addition, by obtaining the average SNR from a plurality of frames, a continuous expiration period may be extracted even if there is a geminate consonant, with which no sound is uttered, in the expiration period.

In FIG. 2, the extraction unit 4 is, for example, a hardware circuit adopting wired logic connection. Alternatively, the extraction unit 4 may be a function module realized by a computer program executed by the signal processing device 1. The extraction unit 4 receives the first signal from the input unit 2 and the expiration period from the detection unit 3. The extraction unit 4 extracts the number of phonemes of the first signal included in the expiration period. Here, the number of phonemes is, for example, a unit amount obtained by dividing the first signal in accordance with an acoustic feature. Examples of the number of phonemes include the number of moras (vowels), the number of syllables, the number of accents, and the number of beats. In the first embodiment, the number of moras is used as an example of the number of phonemes for convenience of description. Various known techniques may be used to recognize the number of moras. For example, techniques disclosed in Makino, et al. "Recognition of Vowels in Continuous Speech Based on Relative Positional Relationship between Vowels", The Transactions of the Institute of Electronics, Information and Communication Engineers, D Vol. J72-D2 No. 6, pp. 837-845, Singer, et al. "Use of Correlation between Pitch and Spectral Parameters for HMM Phoneme Recognition", ITEJ Technical Report 15(54), 15-20, 1991-09-27, and the like may be used. The extraction unit 4 outputs the number of moras included in the expiration period, which serves as the number of phonemes, to the calculation unit 5 and the estimation unit 6.

The calculation unit 5 is, for example, a hardware circuit adopting wired logic connection. Alternatively, the calculation unit 5 may be a function module realized by a computer program executed by the signal processing device 1. The calculation unit 5 receives the expiration period from the detection unit 3 and the number of phonemes included in the expiration period from the extraction unit 4. The calculation unit 5 calculates the speed of speech in the expiration period by dividing the number of phonemes included in the expiration period by the length of the expiration period. In the first embodiment, a value obtained by dividing the number of phonemes included in the expiration period by the length of the expiration period is defined as the speed of speech in the expiration period for convenience of description. The calculation unit 5 outputs the calculated speed of speech in the expiration period to the estimation unit 6.

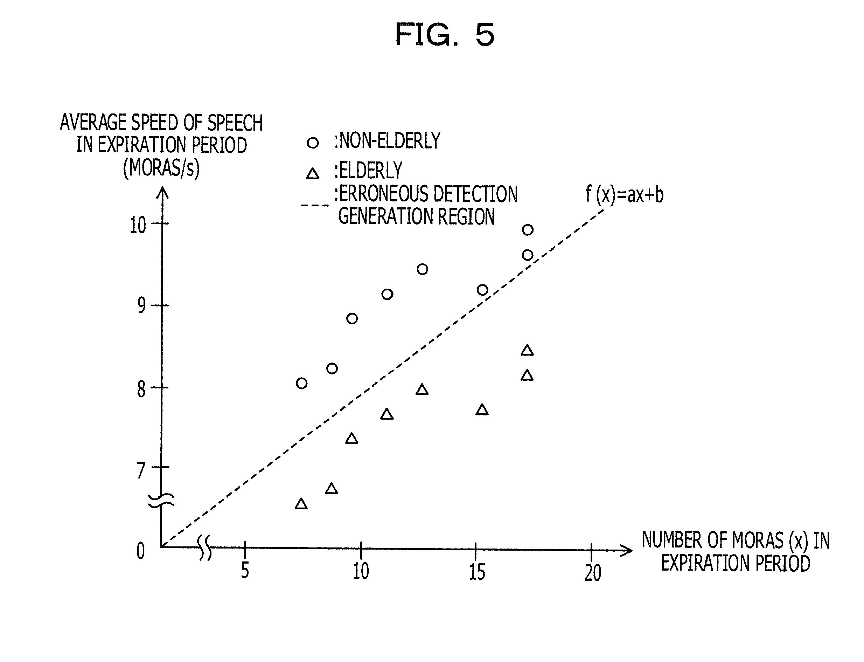

Here, the speed of speech in the expiration period in the first embodiment and technical significance of calculation and extraction of the number of phonemes included in the expiration period will be described. In order to examine factors in changing the speed of speech in bidirectional speech communication in which the content of speech continuously changes, the inventors have focused upon a fact that speakers speak a unified set of contents such as a sentence in one expiration period, as disclosed in C. W. Wightman "Automatic Labeling of Prosodic Patterns", IEEE, 1994. The inventors have then conducted a demonstration experiment while assuming that speakers unconsciously adjust their speed of speech in order to finish speaking a unified set of contents in one expiration period. FIG. 5 is a diagram illustrating the relationship between the number of moras in an expiration period and the average speed of speech in the expiration period. Subjects were told to speak eight sample sentences whose numbers of moras are different from one another, and the obtained distribution of the average speeds of speech for each sentence is illustrated in FIG. 5. The subjects in FIG. 5 were 8 non-elderly people (6 males, 2 females) and 30 elderly people (15 males, 15 females). The sample sentences included, for example, "itsumo no kissaten de matteite kudasai (please wait for me at the café)", "sukiyaki no zairyo wo kattekite kudasai (please go get the ingredients for sukiyaki)", "wakarimashita (I see)", and "kohi ni miruku wa iremasuka (do you put milk in your coffee?)". These sample sentences were experimentally determined in such a way as to be spoken in one expiration period. In FIG. 5, the horizontal axis represents the number of moras included in the expiration period of each sentence, and the vertical axis represents the average speed of speech of the subjects in the expiration period for each sentence. As illustrated in FIG. 5, the speed of speech in the expiration period increased in proportion to the number of moras included in the expiration period, which experimentally verified the assumption made by the inventors. As can be seen from FIG. 5, by changing a threshold (may be referred to as a first threshold) in accordance with the number of moras in the expiration period, elderly people and non-elderly people may be distinguished in accordance with the speed of speech.

Now, a method for determining the first threshold will be described. The first threshold may be, for example, determined before a speaker uses the signal processing device 1 and saved in a cache or a memory, which is not illustrated, of the estimation unit 6 illustrated in FIG. 2. First, speech of the non-elderly people and the elderly people, who are the subjects, are recorded, and the average values of the speeds of speech (the speeds of speech in the expiration period) are calculated for each number of moras in the expiration period. Here, the average speed of speech of the elderly people for the number of moras x is denoted by o(x), and the average speed of speech of the non-elderly people for the number of moras x is denoted by y(x). Next, an intermediate value oy(x) between the average speed of speech of the elderly people and the average speed of speech of the non-elderly people for each number of moras is calculated using the following expression.

$$\text{Math. 7}$$

$$oy(x) = \{o(x) + y(x)\}/2$$

Next, an estimation equation f(x) for estimating oy from x is determined using the method of least squares as follows.

$$\text{Math. 8}$$

$$f(x) = ax + b$$

Here, a and b are values with which an error err represented by the following expression becomes smallest.

$$\text{Math. 9}$$

$$err = \sum_{x=1}^{M} \{oy(x) - f(x)\}^2$$

Here, the first threshold to be changed in accordance with the number of moras included in the expiration period may be calculated by substituting the number of moras extracted by the detection unit 3 for Math. 8, or a table representing the relationship between the number of moras in the expiration period and the first threshold may be saved, for example, in the memory or the cache, which is not illustrated, of the estimation unit 6 illustrated in FIG. 2 in advance.

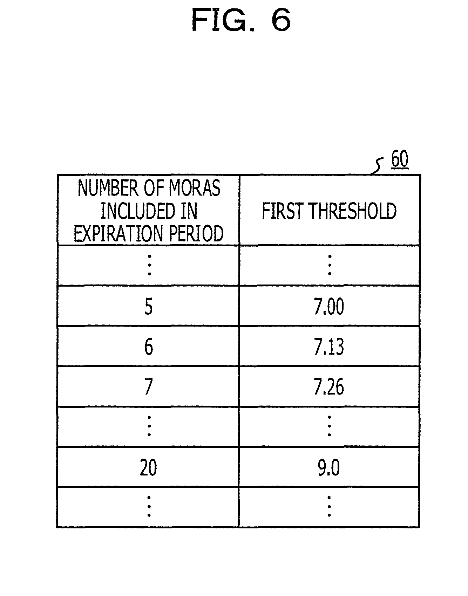

FIG. 6 illustrates a table including the data structure of the first threshold according to the number of moras included in the expiration period. As indicated by a table 60 illustrated in FIG. 6, for example, the number of moras included in the expiration period is divided by a certain period using the Math. 8, and the first threshold according to the certain period is stored in the table 60. The table 60 is, for example, saved in the memory or the cache, which is not illustrated, of the estimation unit 6 illustrated in FIG. 2.

In FIG. 2, the estimation unit 6 is, for example, a hardware circuit adopting wired logic connection. Alternatively, the estimation unit 6 may be a function module realized by a computer program executed by the signal processing device 1. The estimation unit 6 receives the speed of speech in the expiration period from the calculation unit 5 and the number of moras included in the expiration period from the extraction unit 4. The estimation unit 6 estimates an age according to the speed of speech of the speaker on the basis of the speed of speech in the expiration period, the number of moras included in the expiration period, and the first threshold according to the number of moras included in the expiration period stored in the cache or the memory, which is not illustrated, of the estimation unit 6. The estimation unit 6 outputs a result of the estimation of the age according to the speed of speech of the speaker to the control unit 8. A method for estimating the age according to the speed of speech used by the estimation unit 6 may be, for example, a first method for estimating the age or a second method for estimating the age, which will be described hereinafter.

(First Method for Estimating Age)

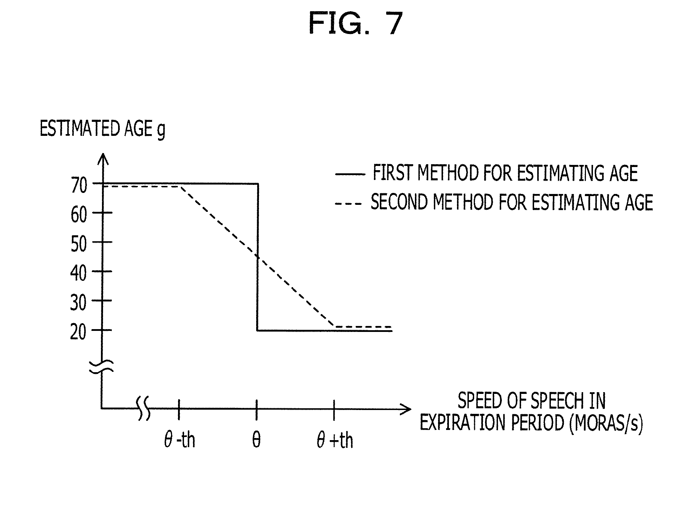

FIG. 7 is a diagram illustrating the relationship between the speed of speech and the estimated age according to the speed of speech. In FIG. 7, Math. 11 used in the first method for estimating the age and Math. 12 used in the second method for estimating the age are put into the form of a diagram. When f(x) is replaced by θ in Math. 8, the following expression is obtained.

Math. 10

$$\theta = ax + b$$

If the speed of speech in the expiration period calculated by the calculation unit 5 is denoted by s, an estimated age g may be obtained as follows using Math. 10.

Math. 11

$$g = 70 \ (\text{if } s < \theta)$$

$$= 20 \ (\text{otherwise})$$

(Second Method for Estimating Age)

If the speed of speech in the expiration period calculated by the calculation unit 5 is denoted by s, the estimated age g may be complementarily obtained as follows using Math. 10.

Math. 12

$$g = 50 \times (\theta + th - s)/th \times 2 + 20 \ (\text{if } \theta - th < s < \theta + th)$$

$$= 70 \ (\text{if } s \leq \theta - th)$$

$$= 20 \ (\text{if } s \geq \theta + th)$$

Here, th is an arbitrary threshold, and may be experimentally determined.

In FIG. 2, the FFT unit 7 is, for example, a hardware circuit adopting wired logic connection. Alternatively, the FFT unit 7 may be a function module realized by a computer program executed by the signal processing device 1. The FFT unit 7 receives the second signal from the input unit 2. The FFT unit 7 performs a fast Fourier transform on the second signal to calculate a frequency spectrum. The FFT unit 7 outputs the calculated frequency spectrum to the control unit 8. Although a fast Fourier transform has been taken as an example of a time-frequency transform, the FFT unit 7 may perform another type of time-frequency transform.

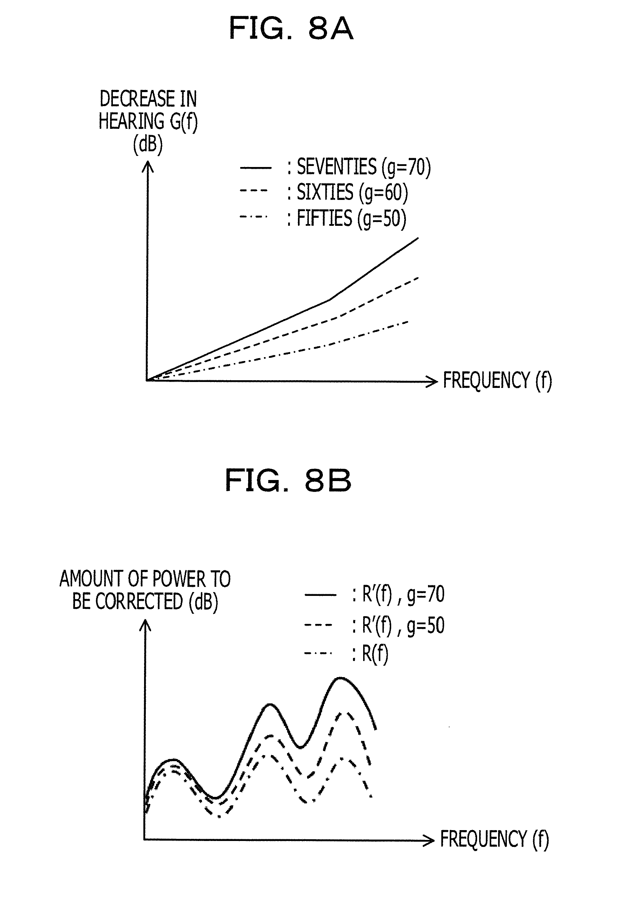

The control unit 8 is, for example, a hardware circuit adopting wired logic connection. Alternatively, the control unit 8 may be a function module realized by a computer program executed by the signal processing device 1. The control unit 8 receives the result of the estimation of the age according to the speed of speech of the speaker from the estimation unit 6 and the frequency spectrum from the FFT unit 7. The control unit 8 controls the frequency spectrum on the basis of the result of the estimation of the age according to the speed of speech of the speaker. FIG. 8A is a diagram illustrating the relationship between a decrease in hearing at each age and frequency. As illustrated in FIG. 8A, hearing at high frequencies decreases as one gets older. The control unit 8 is able to improve the audibility for the speaker by compensating the decrease in hearing at high frequencies. FIG. 8B is a diagram illustrating the relationship between the amount of power of the frequency spectrum to be corrected at each age and the frequency. The control unit 8 corrects the power of the frequency spectrum input from the FFT unit 7 by referring to the diagram of FIG. 8B or a table, which is not illustrated, that satisfies the diagrams of FIGs. 8A and 8B, and outputs the corrected frequency spectrum to the IFFT unit 9 illustrated in FIG. 2. The table, which is not illustrated, that satisfies the diagrams of FIGs. 8A and 8B may be determined using the following expression.

Math. 13

$$R'(f) = R(f) + G(f)$$

Here, R'(f) denotes the corrected power of the frequency spectrum, R(f) denotes the power of the frequency spectrum before the correction, and G(f) denotes the decrease in hearing according to the estimated age determined by FIG. 8A.

Alternatively, the control unit 8 may convert the frequency spectrum received from the FFT unit 7 into the speed of speech according to the estimated age (that is, convert the frequency). In the conversion of the speed of speech, for example, a method disclosed in Japanese Patent No. 3619946 may be adopted. Alternatively, the control unit 8 may combine the above-described correction of power and conversion of the speed of speech.

In FIG. 2, the IFFT unit 9 is, for example, a hardware circuit adopting wired logic connection. Alternatively, the IFFT unit 9 may be a function module realized by a computer program realized by the signal processing device 1. The IFFT unit 9 receives the corrected frequency spectrum from the control unit 8. The IFFT unit 9 performs an inverse fast Fourier transform on the corrected frequency spectrum to calculate a time signal. In the calculation, a frequency-time transform may be performed in contrast to the time-frequency transform performed by the FFT unit 7. The IFFT unit 9 outputs the calculated time signal to the outside as an output signal. The IFFT unit 9 may output the output signal to, for example, a speaker, which is not illustrated, connected to or provided in the signal processing device 1.

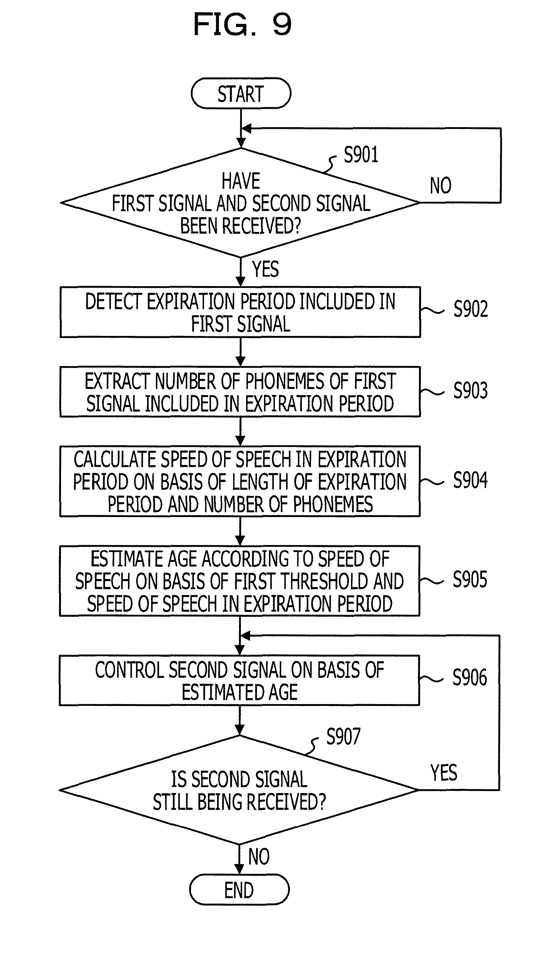

FIG. 9 is a flowchart illustrating a method for processing a signal used by the signal processing device 1. The input unit 2 determines whether or not a first signal, which is a near-end signal, generated by speech uttered by a speaker and a second signal, which is a far-end signal, including a received speech sound have been received from the outside (step S901). If the first signal and the second signal have not been received (NO in step S901), the input unit 2 repeats the determination process in step S901. If the first signal and the second signal have been received (YES in step S901), the input unit 2 outputs the first signal to the detection unit 3 and the extraction unit 4 and the second signal to the FFT unit 7.

The detection unit 3 receives the first signal from the input unit 2 and detects an expiration period included in the first signal (step S902). The detection unit 3 outputs the detected expiration period to the extraction unit 4 and the calculation unit 5.

The extraction unit 4 receives the first signal from the input unit 2 and the expiration period from the detection unit 3. The extraction unit 4 extracts the number of phonemes of the first signal included in the expiration period (step S903). The extraction unit 4 outputs the number of phonemes included in the expiration period to the calculation unit 5 and the estimation unit 6.

The calculation unit 5 receives the expiration period from the detection unit 3 and the number of phonemes included in the expiration period from the extraction unit 4. The calculation unit 5 calculates the speed of speech in the expiration period by dividing the number of phonemes included in the expiration period by the length of the expiration period (step S904). The calculation unit 5 outputs the calculated speed of speech in the expiration period to the estimation unit 6.

The estimation unit 6 receives the speed of speech in the expiration period from the calculation unit 5 and the number of phonemes included in the expiration period from the extraction unit 4. The estimation unit 6 estimates an age according to the speed of speech of the speaker on the basis of the speed of speech in the expiration period, the number of phonemes included in the expiration period, and the first threshold according to the number of phonemes included in the expiration period (step S905). The estimation unit 6 outputs a result of the estimation of the age according to the speed of speech of the speaker to the control unit 8.

The control unit 8 receives the result of the estimation of the age according to the speed of speech of the speaker from the estimation unit 6 and the frequency spectrum calculated by the FFT unit 7. The control unit 8 controls the frequency spectrum of the second signal on the basis of the result of the estimation of the age according to the speed of speech of the speaker (step S906). The control unit 8 outputs the controlled second signal to the outside through the IFFT unit 9.

The input unit 2 determines whether or not the second signal is still being received (step S907). If the input unit 2 determines that the second signal is not already being received (NO in step S907), the signal processing device 1 ends the signal processing illustrated in FIG. 9. If the input unit 2 determines that the second signal is still being received (YES in step S907), the signal processing device 1 repeats the processing in steps S906 and S907. Alternatively, the signal processing device 1 may repeat the processing in steps S902 to S905 at certain time intervals, in order to update the estimated age according to the speed of speech of the speaker.

According to the signal processing device according to the first embodiment, the age according to the speed of speech of the speaker may be accurately estimated. Furthermore, according to the signal processing device according to the first embodiment, since the far-end signal is controlled in accordance with the estimated age, the audibility for a user who is listening to the speech improves. Although the age of a speaker who generates the first signal, which is the near-end signal, is estimated in the first embodiment, the age of the speaker who generates the first signal may be estimated on a speech receiving side, on which the second signal, which is the far-end signal, is generated, and the second signal controlled on the basis of the estimated age according to the speed of speech of the speaker who has generated the first signal may be generated.

(Second Embodiment)

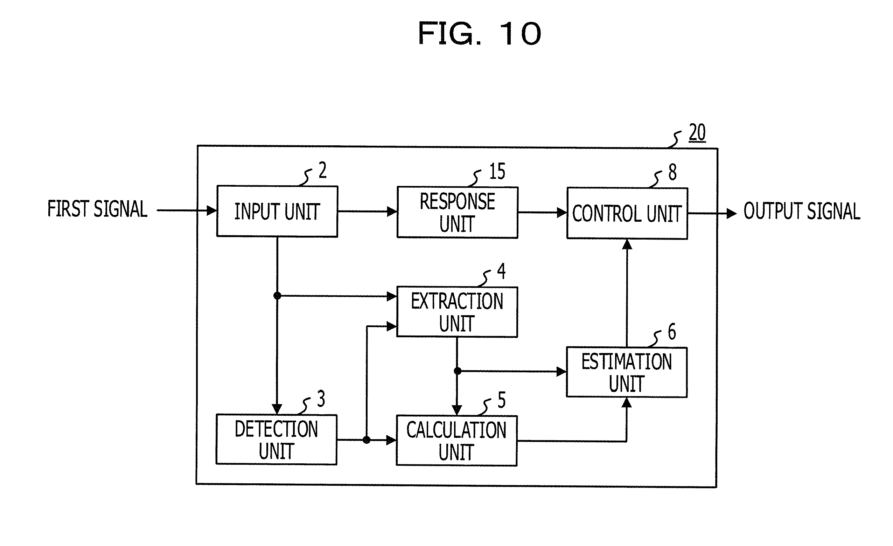

FIG. 10 is a functional block diagram illustrating a signal processing device 20 according to another embodiment. The signal processing device 20 includes an input unit 2, a detection unit 3, an extraction unit 4, a calculation unit 5, an estimation unit 6, a control unit 8, and a response unit 15. The functions and the operations of the detection unit 3, the extraction unit 4, the calculation unit 5, and the estimation unit 6 are the same as those according to the first embodiment, and accordingly detailed description thereof is omitted. The signal processing device 20 may be, for example, used for a car navigation system, a web image search system, or the like adopting speech recognition.

The input unit 2 is, for example, a hardware circuit adopting wired logic connection. Alternatively, the input unit 2 may be a function module realized by a computer program executed by the signal processing device 20. The input unit 2 obtains, from the outside, a first signal, which is a near-end signal, generated by speech uttered by a speaker. The input unit 2 may receive the first signal from, for example, a microphone, which is not illustrated, connected to or provided in the signal processing device 20. The input unit 2 outputs the input first signal to the detection unit 3, the extraction unit 4, and the response unit 15.

The response unit 15 is, for example, a hardware circuit adopting wired logic connection. Alternatively, the response unit 15 may be a function module realized by a computer program executed by the signal processing device 20. The response unit 15 includes a memory or a storage section such as a hard disk drive (HDD) or a solid-state drive (SSD), which is not illustrated. The memory or the storage section stores in advance a plurality of pieces of image information or speech information. Alternatively, the response unit 15 may receive the image information or the speech information from the outside. The response unit 15 receives the first signal from the input unit 2, selects a certain piece of image information or speech information associated with the first signal using a known speech recognition technique, and outputs the selected piece of image information or speech information to the control unit 8 as the second signal.

The control unit 8 is, for example, a hardware circuit adopting wired logic connection. Alternatively, the control unit 8 may be a function module realized by a computer program executed by the signal processing device 20. The control unit 8 receives the result of the estimation of the age according to the speed of speech of the speaker from the estimation unit 6 and the second signal from the response unit 15. The control unit 8 controls the second signal on the basis of the result of the estimation of the age according to the speed of speech of the speaker. The control unit 8 outputs the controlled second signal to the outside as an output signal. The control unit 8 may output the output signal to, for example, a speaker, which is not illustrated, connected to or provided in the signal processing device 20.

When the second signal includes speech information, the control unit 8 performs the control of power using Math. 13 or the control of the speed of speech disclosed in Japanese Patent No. 3619946. Alternatively, the control unit 8 may combine the correction of power of the second signal and the conversion of the speed of speech.

When the second signal includes image information, the control unit 8 controls pixels or regions of the image information. Here, the pixels in the second embodiment indicate information including at least luminance, tone, contrast, noise, sharpness, and resolution or information to be subjected to a filtering process. In addition, the regions in the second embodiment indicate information to be subjected to a geometric conversion process including at least the size and the shape of an image.

The control unit 8 may perform, for example, a process for enhancing edges included in image information disclosed in Japanese Laid-open Patent Publication No. 2011-134203 in accordance with the estimated age. In addition, the control unit 8 may perform a process for enlarging regions included in image information in accordance with the estimated age using the following expression.

## Math. 14

$$I'(x, y) = I(x/(g \times a), y/(g \times a))$$

Here, $I'(x, y)$ denotes corrected image information regarding a pixel $x, y$, $I(x, y)$ denotes image information regarding the pixel $x, y$ before the correction, and $g \times a$ denotes a parameter of decrease in eyesight due to aging.

According to the signal processing device according to the second embodiment, the age according to the speed of speech of the speaker may be accurately estimated. Furthermore, according to the signal processing device according to the second embodiment, since the image information or the speech information is controlled in accordance with the estimated age, the visibility and the audibility for the user improves.

(Third Embodiment)

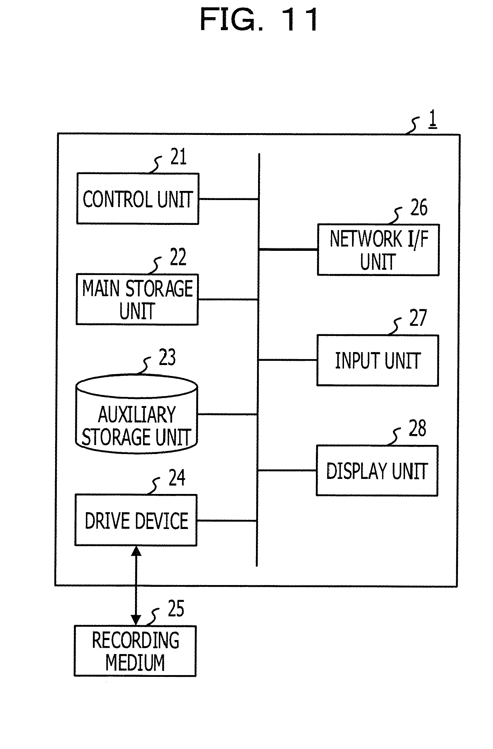

FIG. 11 is a diagram illustrating the hardware configuration of a computer that functions as a signal processing device 1 according to an embodiment. As illustrated in FIG. 11, the signal processing device 1 includes a control unit 21, a main storage unit 22, an auxiliary storage unit 23, a drive device 24, a network interface (I/F) unit 26, an input unit 27, and a display unit 28. These components are connected to one another through a bus in such a way as to be able to communicate data.

The control unit 21 is a central processing unit (CPU) that controls the other components and that calculates and processes data in the computer. In addition, the control unit 21 is an arithmetic device that executes programs stored in the main storage unit 22 and the auxiliary storage unit 23, and receives data from the input unit 27 and a storage device, calculates and processes the data, and outputs the data to the display unit 28, the storage device, or the like.

The main storage unit 22 is a read-only memory (ROM), a random-access memory (RAM), or the like, and is a storage device that stores or temporarily saves programs and data such as an operating system (OS), which is basic software, and application software to be executed by the control unit 21.

The auxiliary storage unit 23 is an HDD or the like and is a storage device that stores data regarding application software and the like.

The drive device 24 reads a program from a recording medium 25, that is, for example, a flexible disk, and installs the program in the auxiliary storage unit 23.

A certain program is stored in the recording medium 25, and the certain program stored in the recording medium 25 is installed in the signal processing device 1 through the drive device 24. The installed certain program may be executed by the signal processing device 1.

The network I/F unit 26 is an interface between a peripheral device having a communication function connected through a network such as a local area network (LAN) or a wide area network (WAN) constructed by a data transmission path such as a wired and/or wireless line and the signal processing device 1.

The input unit 27 includes a cursor key, a keyboard including numeric input keys and various function keys, and a mouse or a touchpad for selecting a key in a screen displayed on the display unit 28. The input unit 27 is a user interface for enabling the user to issue an operation instruction to the control unit 21 and input data.

The display unit 28 includes a cathode ray tube (CRT) or a liquid crystal display (LCD), and performs display according to display data input from the control unit 21.

The above-described method for processing a signal may be realized as a program to be executed by the computer. By installing the program from a server or the like and causing the computer to execute the program, the above-described method for processing a signal may be realized.

Alternatively, the above-described signal processing may be realized by recording the program on the recording medium 25 and causing the computer or a mobile terminal (device) (for example, mobile telephone) to read the recording medium 25 on which the program is recorded. The recording medium 25 may be one of various types of recording media including a recording medium that optically, electrically, or magnetically records information, such as a compact disc read-only memory (CD-ROM), a flexible disk, or a magneto-optical disk, and a semiconductor memory that electrically records information, such as a ROM or a flash memory.

(Fourth Embodiment)

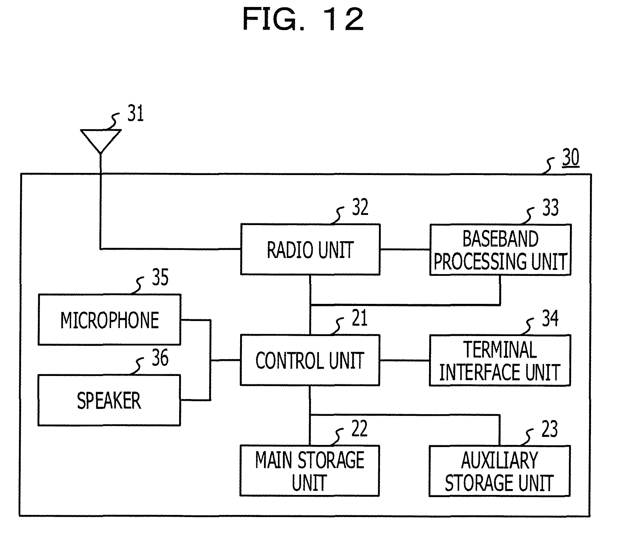

FIG. 12 is a diagram illustrating the hardware configuration of a mobile terminal apparatus 30 according to an embodiment. The mobile terminal apparatus 30 includes an antenna 31, a radio unit 32, a baseband processing unit 33, a control unit 21, a terminal interface unit 34, a microphone 35, a speaker 36, a main storage unit 22, and an auxiliary storage unit 23.

The antenna 31 transmits a wireless signal amplified by a transmission amplifier and receives a wireless signal from a base station. The radio unit 32 performs digital-to-analog conversion on a transmission signal spread by the baseband processing unit 33, converts the transmission signal into a high-frequency signal through quadrature modulation, and amplifies the signal using a power amplifier. The radio unit 32 amplifies a received wireless signal, performs analog-to-digital conversion on the signal, and transmits the signal to the baseband processing unit 33.

The baseband processing unit 33 performs baseband processing including addition of an error correction code to data to be transmitted, data modulation, spreading modulation, inverse spreading of a received signal, a determination as to a reception environment, a determination as to a threshold for each channel signal, and error correction decoding.

The control unit 21 performs wireless control such as transmission and reception of control signals. In addition, the control unit 21 executes a signal processing program stored in the auxiliary storage unit 23 or the like in order to, for example, perform the signal processing according to the first embodiment.

The main storage unit 22 is a ROM, a RAM, or the like, and is a storage device that stores or temporarily saves programs and data such as an OS, which is a basic software, and application software to be executed by the control unit 21.

The auxiliary storage unit 23 is an HDD, an SSD, or the like, and is a storage device that stores data regarding application software and the like.

The terminal interface unit 34 performs data adapter processing and interface processing between a handset and an external data terminal.

The microphone 35 receives ambient sound including speech uttered by a speaker, and outputs the ambient sound to the control unit 21 as a microphone signal. The speaker 36 outputs the signal output from the main storage unit 22 as an output signal.

The components of each device illustrated above do not have to be physically configured as illustrated. That is, specific modes of distributing or integrating each device are not limited to those illustrated, and all or part of each device may be functionally or physically distributed or integrated in an arbitrary unit in accordance with various loads, use conditions, and the like. Various processes described in the above embodiments may be realized by executing prepared programs using a computer such as a personal computer or a work station.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

**Claims**

1. A signal processing device comprising:

   an input unit configured to receive speech of a speaker as a first signal;
   a detection unit configured to detect an expiration period included in the first signal;
   an extraction unit configured to extract a number of phonemes included in the expiration period; and
   a control unit configured to control a second signal, which is an output to the speaker, on the basis of the number of phonemes and a length of the expiration period.

2. The signal processing device according to claim 1,
   wherein the detection unit detects a signal-power-to-noise ratio from a plurality of frames included in the first signal and detects a frame whose signal-power-to-noise ratio is equal to or higher than a second threshold as the expiration period.

3. The signal processing device according to claim 1, further comprising:

   a calculation unit configured to calculate speed of speech in the expiration period by dividing the number of phonemes by the length of the expiration period; and
   an estimation unit configured to estimate an age of the speaker on the basis of the speed of speech in the expiration period and a first threshold according to the number of phonemes.

4. The signal processing device according to claim 1,
   wherein the input unit further receives the second signal including speech information, and
   wherein the control unit corrects power or a frequency characteristic of the second signal on the basis of the number of phonemes and the length of the expiration period.

5. The signal processing device according to claim 1, further comprising:

   a response unit configured to output the second signal including image information or speech information on the basis of the first signal,
   wherein the control unit corrects a pixel or a region of the image information, or power or a frequency characteristic of the speech information, is corrected on the basis of the number of phonemes and the length of the expiration period.

6. The signal processing device according to claim 4,
   wherein the control unit corrects the power or the frequency characteristic of the speech information such that the power or the frequency characteristic becomes equal to or larger than a lower limit of an audible range on the basis of the number of phonemes and the length of the expiration period.

**7.** The signal processing device according to claim 5,
wherein the control unit applies edge enhancement correction or region enlargement correction to the image information in accordance with a visual characteristic on the basis of the number of phonemes and the length of the expiration period.

**8.** A method for processing a signal, the method comprising:

receiving speech of a speaker as a first signal;
detecting an expiration period included in the first signal;
extracting a number of phonemes included in the expiration period; and
controlling a second signal, which is an output to the speaker, on the basis of the number of phonemes and a length of the expiration period.

**9.** The method according to claim 8,
wherein, in the detecting, a signal-power-to-noise ratio is detected from a plurality of frames included in the first signal and a frame whose signal-power-to-noise ratio is equal to or higher than a second threshold is detected as the expiration period.

**10.** The method according to claim 8, further comprising:

calculating speed of speech in the expiration period by dividing the number of phonemes by the length of the expiration period; and
estimating an age of the speaker on the basis of the speed of speech in the expiration period and a first threshold according to the number of phonemes.

**11.** The method according to claim 8,
wherein, in the receiving, the second signal including speech information is further received, and
wherein, in the controlling, power or a frequency characteristic of the second signal is corrected on the basis of the number of phonemes and the length of the expiration period.

**12.** The method according to claim 10, further comprising:

outputting the second signal including image information or speech information on the basis of the first signal,
wherein, in the controlling, a pixel or a region of the image information, or power or a frequency characteristic of the speech information, is corrected on the basis of the age estimated in the estimating.

**13.** The method according to claim 11,
wherein, in the controlling, the power or the frequency characteristic of the speech information is corrected such that the power or the frequency characteristic becomes equal to or larger than a lower limit of an audible range on the basis of the number of phonemes and the length of the expiration period.

**14.** The method according to claim 12,
wherein, in the controlling, edge enhancement correction or region enlargement correction is applied to the image information in accordance with a visual characteristic on the basis of the number of phonemes and the length of the expiration period.

**15.** A computer-readable storage medium storing a signal processing program for causing a computer to execute a process comprising:

receiving speech of a speaker as a first signal;
detecting an expiration period included in the first signal;
extracting a number of phonemes included in the expiration period; and
controlling a second signal for the speaker on the basis of the number of phonemes and a length of the expiration period.

# FIG. 1

# FIG. 2

EP 2 736 043 A2

# FIG. 3

FIRST SIGNAL

3

VOLUME
CALCULATION
SECTION — 11

AVERAGE SNR
CALCULATION
SECTION — 13

NOISE ESTIMATION
SECTION — 12

EXPIRATION PERIOD
DETERMINATION
SECTION — 14

EXPIRATION
PERIOD

FIG. 4

# FIG. 5

AVERAGE SPEED OF SPEECH
IN EXPIRATION PERIOD
(MORAS/s)

o  :NON-ELDERLY

△  :ELDERLY

--- :ERRONEOUS DETECTION
    GENERATION REGION

f (x)=ax+b

NUMBER OF MORAS (x) IN
EXPIRATION PERIOD

EP 2 736 043 A2

# FIG. 6

| NUMBER OF MORAS INCLUDED IN EXPIRATION PERIOD | FIRST THRESHOLD |
|:---:|:---:|
| ⋮ | ⋮ |
| 5 | 7.00 |
| 6 | 7.13 |
| 7 | 7.26 |
| ⋮ | ⋮ |
| 20 | 9.0 |
| ⋮ | ⋮ |

# FIG. 7

ESTIMATED AGE g

—— FIRST METHOD FOR ESTIMATING AGE
--- SECOND METHOD FOR ESTIMATING AGE

SPEED OF SPEECH IN
EXPIRATION PERIOD (MORAS/s)

$\theta$-th      $\theta$      $\theta$+th

# FIG. 8A

DECREASE IN
HEARING G(f)
(dB)

—— : SEVENTIES (g=70)
--- : SIXTIES (g=60)
-·-· : FIFTIES (g=50)

FREQUENCY (f)

# FIG. 8B

AMOUNT OF POWER TO
BE CORRECTED (dB)

—— : R'(f) , g=70
--- : R'(f) , g=50
-·-· : R(f)

FREQUENCY (f)

# FIG. 9

```
                    START

                      │
                      ▼
              ┌─────────────────────┐   S901
              │        HAVE         │
         ─────│ FIRST SIGNAL AND SECOND SIGNAL │──── NO ──┐
              │    BEEN RECEIVED?   │                     │
              └─────────────────────┘                     │
                      │                                   │
                     YES                                  │
                      ▼                                   │
        ┌──────────────────────────────┐   S902           │
        │ DETECT EXPIRATION PERIOD INCLUDED IN │           │
        │         FIRST SIGNAL         │                   │
        └──────────────────────────────┘                   │
                      │                                    │
                      ▼                                    │
        ┌──────────────────────────────┐   S903           │
        │ EXTRACT NUMBER OF PHONEMES OF FIRST │            │
        │ SIGNAL INCLUDED IN EXPIRATION PERIOD │           │
        └──────────────────────────────┘                   │
                      │                                    │
                      ▼                                    │
        ┌──────────────────────────────┐   S904           │
        │ CALCULATE SPEED OF SPEECH IN EXPIRATION │        │
        │ PERIOD ON BASIS OF LENGTH OF EXPIRATION │        │
        │ PERIOD AND NUMBER OF PHONEMES │                  │
        └──────────────────────────────┘                   │
                      │                                    │
                      ▼                                    │
        ┌──────────────────────────────┐   S905           │
        │ ESTIMATE AGE ACCORDING TO SPEED OF │             │
        │ SPEECH ON BASIS OF FIRST THRESHOLD AND │         │
        │ SPEED OF SPEECH IN EXPIRATION PERIOD │           │
        └──────────────────────────────┘                   │
                      │                                    │
                      ▼◄───────────────────────┐          │
        ┌──────────────────────────────┐   S906 │          │
        │ CONTROL SECOND SIGNAL ON BASIS OF │    │          │
        │         ESTIMATED AGE        │        │          │
        └──────────────────────────────┘        │          │
                      │                         │          │
                      ▼                         │          │
              ┌─────────────────────┐   S907     │          │
              │   IS SECOND SIGNAL  │── YES ─────┘          │
              │  STILL BEING RECEIVED? │                    │
              └─────────────────────┘                       │
                      │                                     │
                     NO                                     │
                      ▼                                     │
                    END
```

# FIG. 10

FIRST SIGNAL → INPUT UNIT (2) → RESPONSE UNIT (15) → CONTROL UNIT (8) → OUTPUT SIGNAL

EXTRACTION UNIT (4)

ESTIMATION UNIT (6)

DETECTION UNIT (3)

CALCULATION UNIT (5)

20

EP 2 736 043 A2

# FIG. 11

# FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3619946 B

- JP 2011134203 A

### Non-patent literature cited in the description

- **KATSUYUKI NIYADA.** Research on Speech Recognition Interface for Elderly People Based on Acoustic Feature Extraction of Elderly Speech. *Report of the Grant-in-Aid for Scientific Research*
- **MAKINO et al.** Recognition of Vowels in Continuous Speech Based on Relative Positional Relationship between Vowels. *The Transactions of the Institute of Electronics, Information and Communication Engineers, D,* vol. J72-D2 (6), 837-845

- **SINGER et al.** Use of Correlation between Pitch and Spectral Parameters for HMM Phoneme Recognition. *ITEJ Technical Report,* 27 September 1991, vol. 15 (54), 15-20
- **C. W. WIGHTMAN.** Automatic Labeling of Prosodic Patterns. *IEEE,* 1994